# EUROPÄISCHE PATENTSCHRIFT

(11) **EP 0 740 029 B1**
(45) Veröffentlichungstag und Bekanntmachung des Hinweises auf die Patenterteilung: **18.04.2001**
(21) Anmeldenummer: 96104036.7
(22) Anmeldetag: 14.03.1996
(51) Int. Cl.: E04F 13/08, F16B 21/06

(54) **Verbindungselement**
Fastening device
Dispositif de fixation

(30) Priorität: 28.04.1995 DE 19515673
(43) Veröffentlichungstag der Anmeldung: 30.10.1996
(73) Patentinhaber: fischerwerke Artur Fischer GmbH & Co. KG, 72178 Waldachtal (DE)
(72) Erfinder: Lind, Stefan, 72178 Waldachtal (DE); Feulner, Werner, 91058 Erlangen (DE)

(56) Entgegenhaltungen:
- DE-A- 1 400 800
- US-A- 5 257 490
- US-A- 5 280 690

## Beschreibung

Die Erfindung betrifft ein Verbindungselement mit den Merkmalen des Oberbegriffs des Anspruchs 1, das insbesondere zum Anbringen von aus Glas bestehenden Fassadenplatten an einem Gebäude vorgesehen ist.

Damit Befestigungsteile einer Fassade, insbesondere einer Glasfassade vollständig von deren Fassadenplatten überdeckt sind, ist es bekannt, an den Fassadenplatten Bolzen anzubringen, die durch Bohrungen in einer am Gebäude angebrachten Unterkonstruktion hindurchgesteckt werden und durch Aufschrauben einer Mutter oder Aufstecken eines Clips von der Rückseite her befestigt werden. Zum Anbringen des Bolzens beispielsweise an einer Glasplatte kann ein Blech mit dem Glas verklebt und der Bolzen senkrecht stehend am Blech angeschweißt werden. In Fassadenplatten aus Holz läßt sich der Bolzen einschrauben, in Fassadenplatten aus Stein mit einem Dübel verankern. Die Verbindungsmöglichkeiten des Bolzens mit der Fassadenplatte sind ansich bekannt.

Aus der US-A-5 257 490 ist ein Verbindungselement bekannt, das einen Bolzen aufweist, der in ein Mutternelement eingeschraubt ist, welches in einer Fassadenplatte verankert ist. An seinem der Fassadenplatte abgewandten Ende ist der Bolzen mit einem umlaufenden Tannenbaumprofil versehen, mit dem er in einem Dübel eingesetzt ist, der in einer Gebäudewand oder dgl. verankerbar ist. Zur Aufnahme des Bolzens im Dübel weist der Dübel eine Rastscheibe mit einem Mittelloch und vier nach innen stehenden Rastzungen auf, zwischen die der Bolzen mit seinem Tannenbaumprofil steckbar ist. Das Tannenbaumprofil des Bolzens verrastet mit den Rastzungen der Rastscheibe, so daß der Bolzen nicht aus dem Dübel herausziehbar ist. Der Dübel des bekannten Verbindungselements ist aus drei Teilen, nämlich dem eigentlichen Dübel, der in den Dübel eingelegten Rastscheibe und einer auf den Dübel aufgeschraubten Abdeckkappe, die die Rastscheibe im Dübel hält, zusammengesetzt. Der Dübel des bekannten Verbindungselements ist dadurch aufwendig in seiner Herstellung.

Der Erfindung liegt die Aufgabe zugrunde, ein Verbindungselement so auszubilden, daß es Relativbewegungen zwischen Fassadenplatte und Gebäude in Richtung der Fassadenebene ermöglicht.

Diese Aufgabe wird gelöst durch ein Verbindungselement mit den Merkmalen des Anspruchs 1. Beim erfindungsgemäßen Verbindungselement wird ein Bolzen in einen Dübel eingeschoben und dabei mit diesem verrastet, so daß er nicht mehr herausgezogen werden kann. Die Raststelle befindet sich in einem Abstand von der Fassadenplatte. Zum Anbringen einer Fassadenplatte an einem Gebäude werden mehrere derartige Bolzen an einer Innenseite der Fassadenplatte angebracht und mit dieser in eine entsprechende Anzahl am Gebäude oder an einer am Gebäude angebrachten Unterkonstruktion verankerte Dübel eingeschoben und verrastet. In einer Dübelbohrung weist der Bolzen Spiel auf, das eine Bewegung in radialer Richtung, also in Richtung der Ebene der Fassadenplatte, ermöglicht. Aufgrund einer Elastizität des Dübels macht die Raststelle die Bewegung der Fassadenplatte mit. Eine Gelenkigkeit zwischen Bolzen und Dübel an der Raststelle läßt ebenfalls eine Bewegung des Bolzens im Dübel zu. Eine solche Bewegungsmöglichkeit ist notwendig, um Bewegungen der Fassadenplatte durch Winddruck- und Sogkräfte zu ermöglichen, um Temperaturdehnungen der Fassadenplatte und Fertigungstoleranzen auszugleichen.

Der Dübel des erfindungsgemäßen Verbindungselements weist Längsschlitze auf, die im Bereich der Raststelle mit dem Bolzen angeordnet sind. Diese Schlitze ermöglichen zum einen eine elastische Aufweitung des Dübels beim Einrasten des Bolzens. Zum anderen lassen sich in Längsrichtung des Dübels verlaufende Dübelsegmente, in die der Dübel durch die Längsschlitze im Bereich der Raststelle geteilt ist, mit geringer Kraft in radialer Richtung elastisch verformen. Dadurch wird eine Verschiebemöglichkeit des Bolzens an seiner Raststelle parallel zur Ebene der Fassadenplatte geschaffen, welche die Ausgleichsbewegung der Fassadenplatten gegenüber dem Gebäude ermöglicht. Der Verschiebeweg ist durch das Spiel des Bolzens im Dübel begrenzt.

Das erfindungsgemäße Verbindungselement hat den Vorteil, daß sein Dübel einstückig und dadurch einfach und kostengünstig herstellbar ist. Weiterer Vorteil des Verbindungselements ist, daß es eine Ausgleichsbewegung zwischen Fassadenplatte und Gebäude zuläßt. Weiterer Vorteil der Erfindung ist eine einfache und schnelle Montage der Fassadenplatten am Gebäude mit geringen Montagekräften. Ein weiterer Vorteil der Erfindung ist, daß der Bolzen beim Befestigen der Fassadenplatte nicht von der Rückseite, d. h. einer der Außenseite der Fassade abgewandten Seite, her zugänglich sein muß, da keine Mutter auf ihn aufgeschraubt, kein Clips auf ihn aufgesteckt oder ein sonstiges Befestigungsteil an seinem freien Ende angebracht wird.

Bei einer bevorzugten Ausgestaltung der Erfindung weist der Dübel nach außen stehende Rastnasen auf, die zum Verrasten des Dübels in einer eine Hinterschneidung aufweisenden Bohrung vorgesehen sind. Die Hinterschneidung kann von einer Wand eines eine Bohrung aufweisenden Hohlprofils gebildet sein, das Teil einer Unterkonstruktion ist, die zur Befestigung der Fassade am Gebäude angebracht ist. Es kann auch eine Sackbohrung mit Hinterschneidung in ansich bekannter Weise am Gebäude angebracht werden.

Bei einer Weiterbildung der Erfindung weisen die Rastnasen Sicherungszungen auf. Diese stehen in Längsrichtung des Dübels von den Rastnasen ab und ragen in die Bohrung hinein, in die der Dübel eingesetzt ist. Dadurch wird verhindert, daß sich die Rastnasen in radialer Richtung nach außen aufspreizen können. Auf diese Weise bleibt der Dübel auch bei sehr hoher Belastung durch Zugkräfte am Bolzen sicher in der Bohrung verrastet.

Um das Spiel des Bolzens im Dübel zu verringern oder den Bolzen spielfrei im Dübel zu halten, kann der Mantelraum zwischen Bolzen und Dübel vollständig oder teilweise mit Material ausgefüllt werden. Bei einer Ausgestaltung der Erfindung wird zu diesem Zweck eine Hülse auf den Bolzen aufgesteckt, die das Spiel des Bolzens im Dübel begrenzt oder auf Null reduziert.

Bei einer Ausgestaltung der Erfindung ist ein freies Ende des Bolzens zu einer Art Körnerspitze geformt. Auf diese Weise können die Bohrungspositionen für die Dübel mit den an der Fassadenplatte angebrachten Bolzen markiert werden.

Die Erfindung wird nachfolgend anhand eines in der Zeichnung dargestellten Ausführungsbeispiels näher erläutert. Die Figuren zeigen:
- Figur 1: ein erfindungsgemäßes Verbindungselement im Längsschnitt,
- Figur 2: das Verbindungselement gemäß Figur 1 um 90° verdreht und mit eingelegter Hülse, und
- Figur 3: einen Querschnitt des Verbindungselementes gemäß der Schnittlinie A-A.

Das in der Zeichnung dargestellte, erfindungsgemäße Verbindungselement 10 umfaßt einen Dübel 12 und einen Bolzen 14. Der Dübel 12 ist in einer Bohrung 16 in einem Stahlhohlprofil 18 eingesetzt. Das Stahlhohlprofil 18 ist Bestandteil einer Unterkonstruktion zum Anbringen einer Fassade an einem Gebäude (nicht dargestellt). Der Dübel 12 liegt mit einem Flansch 20 an einer Außenseite des Stahlprofils 18 an.

Der Dübel 12 weist zwei diametral gegenüberliegende, radial vorspringende Rastnasen 22 auf, die einen Rand 24 der Bohrung 16, welcher eine Hinterschneidung bildet, hintergreifen und dadurch den Dübel 12 in der Bohrung 16 verrasten. Beim Einsetzen des Dübels 12 in die Bohrung 16 werden die Rastnasen 22 elastisch zusammengedrückt und federn heraus, sobald eine Wand 23 des Hohlprofils 18 überwunden ist. Die Rastnasen 22 sind durch Längsschlitze 26 von einer Umfangswand 27 des Dübels 12 getrennt, sie gehen an ihrem der Wand 23 abgewandten Ende einstückig in den Dübel 12 über.

Von den Rastnasen 22 stehen mit ihnen einstückige Sicherheitsnasen 28, achsparallel zum Dübel 12 in Richtung der Außenseite des Hohlprofils 18 ab. Sie ragen in die Bohrung 16 im Hohlprofil 18 hinein und verhindern auf diese Weise, daß sich die Rastnasen 22 radial nach außen aufspreizen können, wenn der Dübel 12 in Richtung nach außen aus der Bohrung 16 heraus gezogen oder gedrückt wird.

In den Dübel 12 ist der Bolzen 14 eingeführt. Dieser ist an seinem rückwärtigen, äußeren Ende an einem Blech 30 angeschweißt, das mit einer Glasplatte 32, die als Fassadenplatte dient, verklebt ist. Das Blech 30 liegt am Flansch 20 des Dübels 12 an.

An einem vorderen, von der Glasplatte 32 abstehenden Ende weist der Bolzen 14 eine Nut 34 auf, deren vordere Ringschulter eine Hinterschneidung 36 bildet, welche eine vordere Stirnfläche 38 des Dübels 12 hintergreift und ein Herausziehen des Bolzens 14 aus dem Dübel 12 verhindert.

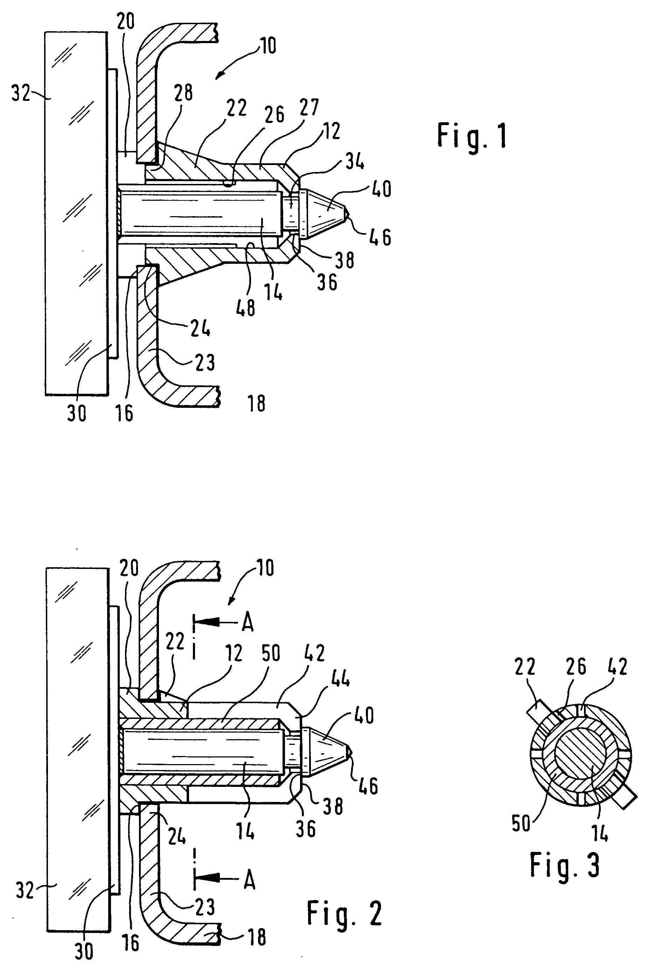

Ein Kopf am vorderen Ende des Bolzens 14 ist als Spreizkonus 40 ausgebildet. Beim Einstecken des Bolzens 14 in den Dübel 12 spreizt der Konus 40 den in seinem vorderen Bereich bis etwa zur Mitte durch Längsschlitze 42 (Figur 2) in Sektoren 44 unterteilten Dübel 12 auf. Sobald der Spreizkonus 40 auf der Stirnseite 38 aus dem Dübel 12 austritt, schnappen dessen Sektoren 44 nach innen und verrasten dadurch den Bolzen 14 im Dübel 12. (In Figur 2 ist die Schnittebene gegenüber Figur 1 so verdreht, daß sie in einer Ebene mit zwei einander gegenüberliegenden Längsschlitzen 42 liegt.)

An seinem freien Ende geht der Spreizkonus 40 in eine Körnerspitze 46 über, die zum Markieren der Position der Bohrungen 16 am Hohlprofil 18 bei der Montage der Fassadenplatte 32 verwendet werden können.

Die durch die Längsschlitze 42 gebildeten Sektoren 44 des Dübels 12 lassen sich elastisch in radialer Richtung mit geringer Kraft verformen, wogegen sie den Bolzen 14 über dessen Hinterschneidung 36 gegen eine Zugkraft, die in Richtung aus dem Dübel 12 heraus wirkt, abstützen. Dadurch wird die Glas-Fassadenplatte 32 in Anlage am Flansch 20 des Dübels 12 gehalten. Der Durchmesser des Bolzens 14 ist kleiner als der Durchmesser einer Längsbohrung 48 des Dübels 12, in der der Bolzen 14 einliegt. Dadurch hat der Bolzen 14 Spiel in radialer Richtung im Dübel 12. Aufgrund der elastischen Verformbarkeit der Sektoren 44 des Dübels 12 in radialer Richtung läßt sich der Bolzen 14 in radialer Richtung im Dübel 12 bewegen, ohne daß seine Hinterschneidung 36 dabei außer Eingriff von der Stirnfläche 38 des Dübels 12 gelangen würde. Die Glas-Fassadenplatte 32 kann somit eine Ausgleichsbewegung gegenüber der Unterkonstruktion durchführen und wird dabei stets in Anlage am Flansch 20 des Dübels 12 gehalten.

Um die Glas-Fassadenplatte 32 an einer Stelle fest zu fixieren, kann, wie in Figur 2 dargestellt, eine Hülse 50 zwischen den Bolzen 14 und den Dübel 12 eingelegt werden, so daß kein Spiel mehr zwischen Bolzen 14 und Dübel 12 besteht. Eine dünnwandigere Hülse (nicht dargestellt), die einen Mantelraum zwischen Bolzen 14 und Dübel 12 nicht vollständig ausfüllt, ermöglicht es, das Spiel zu verringern. Ebenso kann eine elastische Hülse zwischen Bolzen 14 und Dübel 12 eingelegt werden, die eine Ausgleichsbewegung der Glas-Fassadenplatte 32 durch elastische Verformung der Hülse zuläßt. Auch läßt sich der Mantelraum zwischen Bolzen 14 und Dübel 12 beispielsweise mittels Kunststoff vollständig oder teilweise ausfüllen, um das Spiel zwischen Bolzen 14 und Dübel 12 zu unterbinden oder zu verkleinern.

Im dargestellten Ausführungsbeispiel besteht der Bolzen 14 aus Metall, vorzugsweise aus nichtrostendem Stahl. Der Dübel 12 besteht ebenso wie die Hülse 50 aus Kunststoff, vorzugsweise aus Polyamid. Aus Flammschutzgründen können der Dübel 12 und die Hülse 50 ebenfalls aus Metall, beispielsweise aus Aluminium gefertigt sein.

## Patentansprüche

1. Verbindungselement (10) zum Anbringen von Paneelen, Fassadenplatten (32) oder dgl. an einem Gebäude, mit einem an der Fassadenplatte (32) oder dgl. anbringbaren Bolzen (14), wobei der Bolzen (14) eine Hinterschneidung (36) mit Abstand von der Fassadenplatte (32) oder dgl. aufweist, mit der er an einem Dübel (12) verrastet ist, der an dem Gebäude oder dgl. verankerbar ist, und wobei eine Bohrung (48) des Dübels (12), in welcher der Bolzen (14) einliegt, einen größeren Durchmesser als der Bolzen (14) aufweist, **dadurch gekennzeichnet**, daß der Dübel (12) Längsschlitze (42) im Bereich einer Raststelle mit dem Bolzen (14) aufweist.

2. Verbindungselement nach Anspruch 1, **dadurch gekennzeichnet**, daß der Dübel (12) nach außen abstehende Rastnasen (22) aufweist.

3. Verbindungselement nach Anspruch 2, **dadurch gekennzeichnet**, daß die Rastnasen (22) in Längsrichtung des Dübels (12) von ihnen abstehende Sicherungszungen (28) aufweisen.

4. Verbindungselement nach Anspruch 1, **dadurch gekennzeichnet**, daß das Verbindungselement (10) eine Hülse zum Einlegen zwischen den Bolzen (14) und den Dübel (12) aufweist.

5. Verbindungselement nach Anspruch 1, **dadurch gekennzeichnet**, daß ein freies Ende des Bolzens (14) nach Art einer Körnerspitze (46) ausgebildet ist.

## Claims

1. A connecting element (10) for mounting panelling, facing panels (32) or the like on a building, having a bolt (14) attachable to the facing panel (32) or the like, the bolt (14) having spaced from the facing panel (32) or the like an undercut (36), with which the bolt is locked to a fixing plug (12) that is anchorable to the building or the like, and wherein a bore (48) in the fixing plug (12), in which the bolt (14) lies, has a larger diameter than the bolt (14), characterised in that the fixing plug (12) has longitudinal slits (42) in the region of a locking point with the bolt (14).

2. A connecting element according to claim 1, characterised in that the fixing plug (12) has outwardly directed locking projections (22).

3. A connecting element according to claim 2, characterised in that the locking projections (22) have securing tongues (28) extending from them in the longitudinal direction of the fixing plug (12).

4. A connecting element according to claim 1, characterised in that the connecting element (10) includes a sleeve for insertion between the bolt (14) and the fixing plug (12).

5. A connecting element according to claim 1, characterised in that a free end of the bolt (14) is formed as a centre punch point (46).

## Revendications

1. Dispositif de fixation (10) conçu pour l'installation, sur un bâtiment, de parements, plaques de façade (32) ou éléments similaires, comprenant un tenon (14) pouvant être monté sur la plaque de façade (32) ou élément similaire, ledit tenon (14) présentant, à distance de la plaque de façade (32) ou élément similaire, une contre-dépouille (36) par laquelle il est encliqueté sur une cheville (12) pouvant être ancrée sur le bâtiment ou structure analogue, et un perçage (48) de la cheville (12), dans lequel le tenon (14) est logé, comportant un plus grand diamètre que ledit tenon (14), caractérisé par le fait que la cheville (12) présente des fentes longitudinales (42) dans la région d'une zone d'encliquetage avec le tenon (14).

2. Dispositif de fixation selon la revendication 1, caractérisé par le fait que la cheville (12) présente des becs d'encliquetage (22) dépassant vers l'extérieur.

3. Dispositif de fixation selon la revendication 2, caractérisé par le fait que les becs d'encliquetage (22) possèdent, dans la direction longitudinale de la cheville (12), des languettes d'arrêt (28) saillant au-delà desdits becs.

4. Dispositif de fixation selon la revendication 1, caractérisé par le fait que le dispositif de fixation (10) comporte une douille en vue de l'insertion entre le tenon (14) et la cheville (12).

5. Dispositif de fixation selon la revendication 1, caractérisé par le fait qu'une extrémité libre du tenon (14) est réalisée à la manière d'un pointeau (46).
